(19) **Europäisches Patentamt / European Patent Office / Office européen des brevets**

(11) **EP 2 831 504 B1**

(12) **EUROPEAN PATENT SPECIFICATION**

(45) Date of publication and mention of the grant of the patent:
**26.12.2018 Bulletin 2018/52**

(21) Application number: **13711901.2**

(22) Date of filing: **25.03.2013**

(51) Int Cl.:
**F23R 3/00** [(2006.01)]

(86) International application number:
**PCT/EP2013/056229**

(87) International publication number:
**WO 2013/144070 (03.10.2013 Gazette 2013/40)**

(54) **COMBUSTION CHAMBER SEAL SEGMENTS EQUIPPED WITH DAMPING DEVICES**

VERBRENNUNGSKAMMERDICHTSEGMENTE MIT DÄMPFUNGSVORRICHTUNGEN

SEGMENTS D'ÉTANCHÉITÉ DE CHAMBRE DE COMBUSTION ÉQUIPÉS DE DISPOSITIFS D'AMORTISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 EP 12162752**

(43) Date of publication of application:
**04.02.2015 Bulletin 2015/06**

(73) Proprietor: **Ansaldo Energia IP UK Limited London W1G 9DQ (GB)**

(72) Inventors:
• **DE JONGE, Jeffrey**
  **CH-5400 Baden (CH)**
• **HUBER, Andreas**
  **70374 Stuttgart (DE)**
• **SCHUERMANS, Bruno**
  **CH-1814 La Tour de Peilz (CH)**
• **BENZ, Urs**
  **CH-5073 Gipf-Oberfrick (CH)**

(74) Representative: **Bernotti, Andrea et al Studio Torta S.p.A. Via Viotti, 9 10121 Torino (IT)**

(56) References cited:
**EP-A1- 1 669 670     EP-A1- 1 890 083**

**Description**

TECHNICAL FIELD

The present invention relates to the field of gas turbines, and more particularly to gas turbine combustors having one or more tuned damping devices included into combustor seal to suppress high frequency thermo-acoustically induced pressure oscillations.

BACKGROUND INFORMATION

Gas turbine combustors can cause gas pressure (acoustic) and temperature oscillations during operation. These are especially a problem with lean premixed, low emissions combustors.

These thermo-acoustic combustion oscillations are amplified when the frequency of the oscillations matches an acoustic resonant frequency or frequencies of the combustor volume. These pressure and thermal fluctuations and can cause mechanical and thermal damage to the turbine. They also may limit the usable range of the turbine.

Such oscillations have been a known problem since the early days of gas turbine development. A possible method to suppress such oscillations consists in attaching damping devices having resonator cavities, or similar devices to the combustors.

Space Restrictions

In the past, dampers have been applied to a burner front panel. Since more damping devices increase damping efficiency, there may be several damping devices used. Also, multiple frequencies could be damped. This would also require additional damping devices. Therefore, there may be space restrictions on the front panel.

Difficult to Install/Replace

Also, the damping devices have also been installed on the combustor liner segments. Due to their position, these are sometimes difficult to install. Also, if the turbine is significantly modified, the acoustic frequencies produced by the turbine changes. Therefore, in cases such as these, one would like to change the frequencies dampened. Dampers installed on the burner liner and other hard to access locations, are difficult to replace to change the resonant frequencies damped.

Currently, there is a need for a system for damping acousto-thermal oscillations in gas turbine combustors that is more compact, can be easily installed or replaced, while still providing efficient performance.

EP 1669670 describes a combustion chamber for a gas turbine engine, the combustion chamber being provided with at least one Helmholtz resonator having a resonator cavity and a resonator neck and with an annular sealing member. EP 1890083 discloses a fuel injector for a gas turbine engine.

SUMMARY

The technical aim of the present invention is to provide a burner strip seal arrangement for damping desired frequencies that is compact, fits into existing spaces on a conventional burner, is easy to install and replace by which known acoustic frequencies can be damped.

The design of the present invention of incorporating dampers on seals opens up wider design flexibility as the seals are usually placed at locations where enough space is available. The damping devices on seal segments can therefore increase the high frequency damping potential and increase the number of addressed frequencies. The seal strip arrangements are cheaper and easier to install and replace compared with the prior art designs that were installed on burner front panel or combustor liner segments.

A strip seal arrangement designed to seal a first sealing surface to a second sealing surface is described. It includes a sealing plate with a front face facing a combustion chamber and a back face facing away from the combustion chamber. The sealing plate has one or more holes of a predefined cross-sectional area extending through a thickness of the sealing plate positioned along a length of the sealing plate.

One or more containers having predefined volumes are attached to the back face of the sealing plate in fluid communication with the one or more holes to create at least one acoustic damper. The strip seal arrangement seals two components while damping specified the acoustic vibrations.

The present invention relates to a gas turbine combustor according to claim 1.

Other systems, methods, features, and advantages of the present invention will be or become apparent to one with skill in the art upon examination of the following drawings and detailed description. It is intended that all such additional systems, methods, features, and advantages be included within this description, be within the scope of the present invention, and be protected by the accompanying claims.

BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views. The invention will now be described in more detail with reference to the appended drawings in which:

FIG. 1 is a diagram illustrating the classical Helmholtz acoustic damper.

FIG. 2 is a diagram illustrating a classical Helmholtz acoustic damper and an additional Helmholtz damper installed on the backside of the first one.

FIG. 3 is a graph of amplitude and phase of the reflection coefficient vs. normalized frequency plotted for a Strouhal coefficient of 0.3, 0.5 and 1.0.

Fig. 4 is a perspective view of a burner assembly of a turbine showing a conventional sealing strip intended to be replaced with a seal strip arrangement according to the present invention.

Fig. 5 shows a perspective view of the seal strip arrangement having two dampers partially fitting inside of the slot of front panel.

Fig. 6 is a side elevational view of the seal strip arrangement having two damping devices partially fitting within a slot of the front panel.

Fig. 7 is a perspective view of the seal strip arrangement of the present invention employing six damping devices, and an enlarged partially cut-away portion of the dampers.

DETAILED DESCRIPTION

Theory

There are several types of acoustic dampers such as quarter wave tubes, Helmholtz dampers or acoustic screens. We will focus on Helmholtz dampers.

When air is forced into a cavity, the pressure inside the cavity increases. When the external force pushing the air into the cavity is removed, the higher-pressure air inside will flow out. The cavity will be left at a pressure slightly lower than the outside, causing air to be drawn back in. This process repeats with the magnitude of the pressure changes decreasing each time.

The air in the port (the neck of the chamber) has mass. Since it is in motion, it possesses some momentum. A longer port would make for a larger mass, and vice-versa. The cross-sectional diameter of the port is related to the mass of air and the volume of the chamber. A port that is too small in area for the chamber volume will "choke" the flow while one that is too large in area for the chamber volume tends to reduce the momentum of the air in the port.

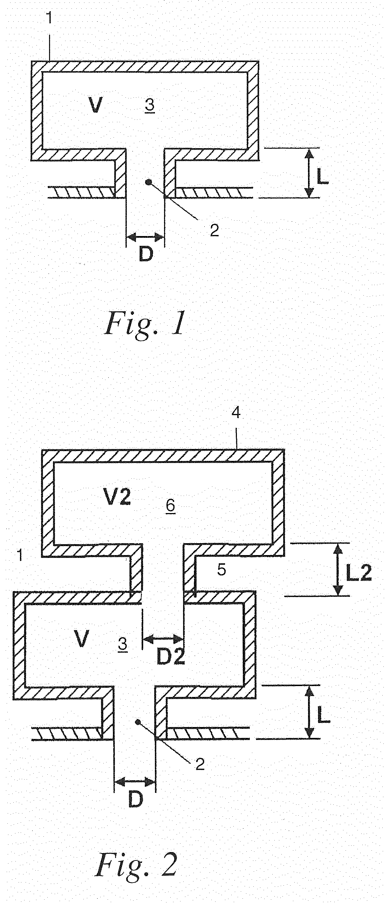

For example, Figure 1 shows a classical Helmholtz damper. It includes a resonator 1 having a volume V, with an acoustic neck 2 that leads to an opening 3, usually opening to a chamber, such as a combustion chamber having acoustic oscillations desired to be damped.

The main parameters, like the volume V of resonator the cross-sectional area of the acoustic neck 2 (here, represented by the diameter D) and the length L of the acoustic neck 2 are highlighted.

The design parameters of the Helmholtz damper are chosen in such a way, that the resonator frequency $f_H$ of the damper corresponds to the frequency of the combustor oscillations.

It can be shown that the angular frequency (corresponding to the resonant frequency ($f_H$)) is given by:

$$f = \sqrt{\gamma \frac{A2P_0}{mV_0}}$$

in radians/second. where

- $\gamma$ (gamma) is the adiabatic index or ratio of specific heats. This value is usually 1.4 for air and diatomic gases.
- $A$ is the cross-sectional area of the neck
- $m$ is the mass in the neck
- $P_0$ is the static pressure in the cavity
- $V_0$ is the static volume of the cavity

For necks with a constant cross sectional area, the area is:

$$A = V_n/L$$

Where:

L is the length of the neck, and
$V_n$ is the volume of the neck.

Thus:

$$\omega_H = \sqrt{\gamma \frac{A V_n P_0}{mLV_0}}$$

By the definition of density: $\dfrac{V_n}{m} = \dfrac{1}{\rho}$, thus:

$$\omega_H = \sqrt{\gamma \frac{P_0 A}{\rho V_0 L}}$$

and

$$f_H = \frac{\omega_H}{2\pi}$$

where: $f_H$ is the resonant frequency (Hz).

The speed of sound in a gas is given by:

$$v = \sqrt{\gamma \frac{P_0}{\rho}}$$

Thus, the frequency of resonance is:

$$f_H = \frac{v}{2\pi} \sqrt{\frac{A}{V_0 L}}$$

Therefore, the resonant frequency $f_H$ can be selected by selecting the proper cross sectional area A of the acoustic neck 2, the length L of the acoustic neck 2 and the volume $V_0$ of the resonator 1. (Please note that this equation holds for the cross-sectional area of the opening being the same as the cross-sectional area of the acoustic neck. It also applies for an acoustic neck 2 of constant cross sectional area. Further adjustments must be made to these equations if the cross-sectional area of the opening 3 is a different size from that of the acoustic neck 2, or if the acoustic neck 2 does not have a constant cross-sectional area.)

Helmholtz dampers are further described in US Patent application 2011/0179796, published July 28, 2011, owned by the present applicant.

The damping efficiency of Helmholtz damper in state of the art gas turbines is usually increased by the increase of the damping volume V (see Figure 1) and / or by increasing the number of single Helmholtz dampers in the combustor.

Figure 2 shows an arrangement by means of a serial connection of damping devices. It consists of the basic Helmholtz damper, described above, which has an additional Helmholtz damper installed on the backside of the first one. Therefore, second resonator 4 having a volume V2 has a second neck 5 with a second diameter D2 and second length L2 that leads to a second opening 6.

By selecting the proper volume V2, diameter D2 and length L2, the second damper will damp a second desired frequency. Continuing with this arrangement, several frequencies may be dampened in a controlled way, depending on the number of dampers involved, at the same location.

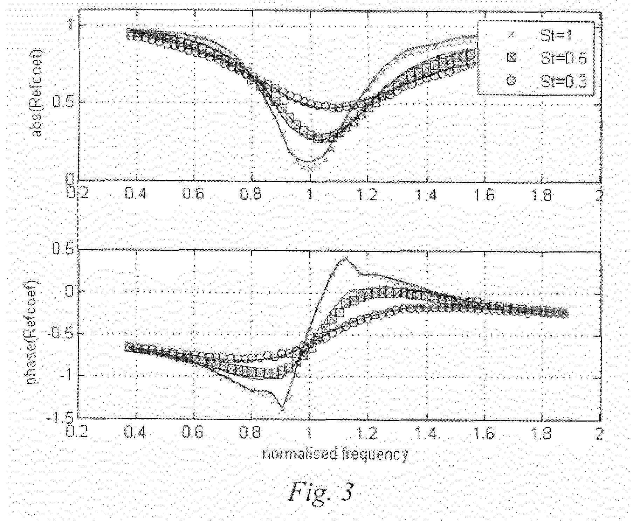

FIG. 3 is a graph of amplitude and phase of the reflection coefficient vs. normalized frequency. The reflection coefficient is the ratio of air passing out of a resonator to the air passing into the resonator. This is plotted for a Strouhal coefficient of 0.3, 0.5 and 1.0. The Strouhal coefficient (St) is defined by (frequency * diameter of the acoustic neck / velocity of the fluid).

As is indicated, when the normalized frequency is approximately = 1, there is a minimum absolute value of the reflection coefficient. This indicated the point of maximum damping.

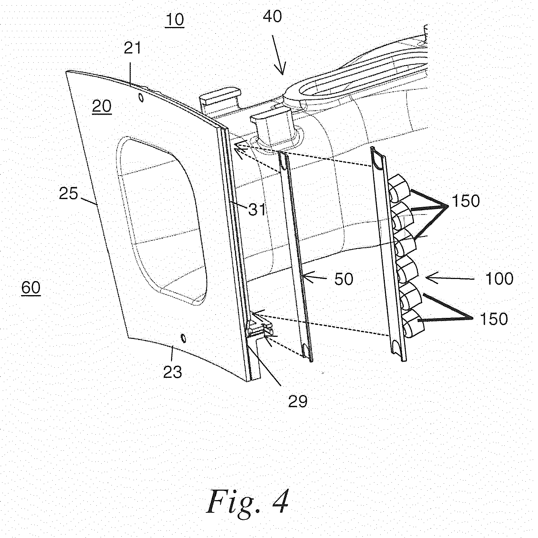

Fig. 4 is a perspective view of a burner assembly 10 of a turbine showing a conventional sealing strip 50 intended to be replaced with a seal strip arrangement 100 according to the present invention.

The burner assembly 10 has a front panel 20 and a burner throat 40. The front panel 20 at its top edge 21 and its bottom edge 23 are secured to a portion of the turbine housing (not shown here). The left edge 25 and the right edge 29 of front panel 20 have a slot 31. The seal strip assembly 100 is intended to seal the front panel 20 to another front panel of an adjacent burner assembly.

Typically, there is space behind the front panel on either side of the burner assembly 10 that will receive the seal strip arrangement 100.

In the prior art arrangement, a left side of the conventional seal strip 50 fit into the slot 31 on a right edge 29 of front panel 20. Typically, the right side of conventional seal strip 50 fit into a slot of the front panel of a second, adjacent burner assembly (not shown). Alternatively, it could fit into a turbine housing member.

The conventional seal strip 50 was intended to provide a seal between two components of a gas turbine. This may be between the burner assembly 10 and a second burner assembly, or between the burner assembly 10 and a housing member of the turbine.

The seal strip arrangement 100 according to the present invention is intended to replace the conventional seal strip 50. As with the conventional seal strip 50, it is also intended to provide a seal between two components of a gas turbine.

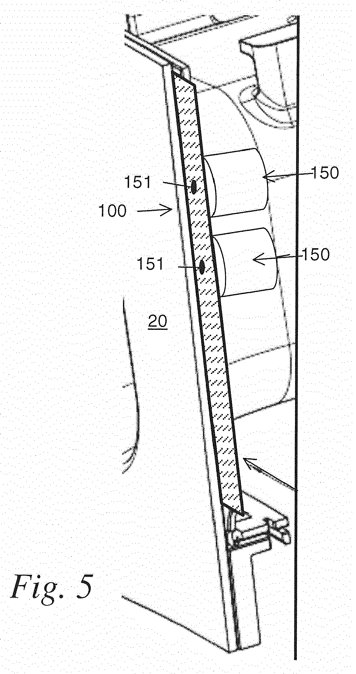

As shown here there are six dampers 150 incorporated into the seal strip arrangement 100. Since this seal strip arrangement 100 does not entirely fit into the slot 31, but has a portion exposing the holes (151 of Figs. 5, 6, and 7) of the dampers 150. The holes are allowed to fluidically interact with the combustion chamber of the turbine.

Figure 5 shows a perspective view of the seal strip arrangement 100 having two dampers 150 fitting inside of the slot of front panel 20.

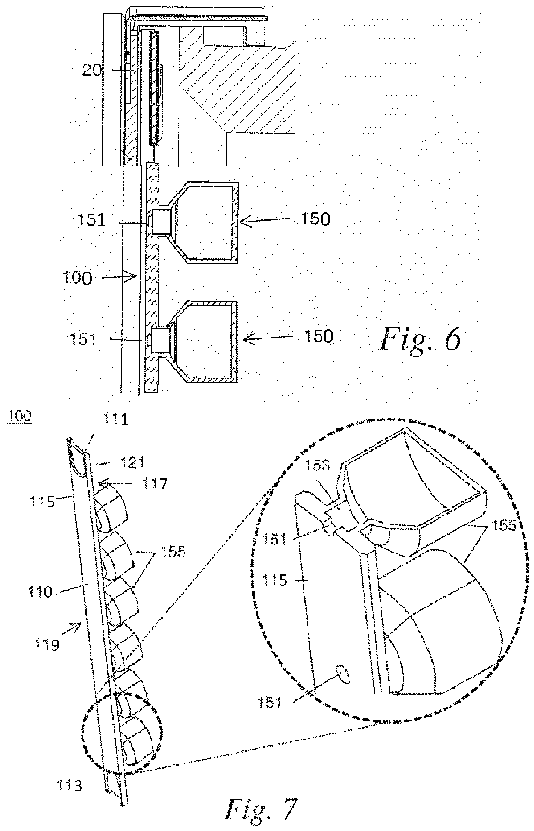

Fig. 6 is a side elevational view of the seal strip arrangement 100 having two dampers 150 fitting within a slot of the front panel 20.

Fig. 7 is a perspective view of the seal strip arrangement 100 of the present invention employing six dampers 150, and an enlarged partially cut-away portion of the dampers 155.

The present invention will further be described in connection with Figs. 5, 6 and 7. The seal strip arrangement 100 includes dampers 150 attached to a sealing plate 110. The sealing plate 110 has a first distal end 111, a second distal end 113 a left edge 115 and a right edge 117. The width is from the left edge 115 to the right edge 117. The length is measured from the first distal end 111 to the second distal end 113. The thickness of the strip is from a front face 119 to a back face 121.

The hole 151 is shown opening in the front face 119 and passing into the neck 153. Neck 153 passes through the thickness of the sealing plate 110 and into container 155. The hole 151, neck 153 and container 155 make up the damper 150. The hole 151 can have the same cross-sectional area as the neck 153 thereby creating one passageway of continuous cross sectional diameter.

As indicated above, the dimensions and volumes of the damper 150 are determined to dampen a desired acoustic frequency.

In an alternative embodiment, additional dampers (as indicated in Fig. 2 and the associated description above) may be attached to those shown in Figs. 5 - 7 to increase efficiency or to dampen additional acoustic frequencies.

It is understood that the invention that the resonator and acoustic neck are not limited to the shapes shown here. These may incorporate other shapes as long as they satisfy the assumptions and equations above.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

Exemplary embodiments of the present disclosure are now described with references to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein.

REFERENCE NUMBERS

**[0051]**

1 Resonator
2 Acoustic neck
3 Opening
4 2nd resonator
5 2nd acoustic neck
6 2nd opening

10 Burner assembly
20 Front panel
21 Top edge
23 Bottom edge
25 Left edge
29 Right edge
31 Slot
40 Burner throat
50 Conventional seal strip
60 Combustion chamber

100 Seal strip arrangement
110 Sealing plate
111 First distal end
113 Second distal end
115 Left edge
117 Right edge
119 Front face
121 Back face
w Width
l Length
t Thickness
150 Damper
151 Hole
153 Neck
155 Containers

**Claims**

1. Gas turbine combustor comprising:

- a plurality of burner assemblies (10) arranged adjacent each other, wherein each burner assembly (10) comprises a front panel (20) with a front face facing a combustion chamber (60) and a back face facing away from the combustion chamber and connected to a burner throat (40), the front panel (20) being provided with a top edge (21) and a bottom edge (23) a left edge (25) and the right edge (29); the left edge (25) and the right edge (29) having a slot (31);
- a plurality of strip seal arrangements (100) configured to provide a seal between a first front panel (20) of a burner assembly (10) and a second front panel (20) of an adjacent burner assembly (100): wherein each strip seal arrangement (100) comprises:

a sealing plate (110) with a front face (119) facing the combustion chamber (60) and a back face facing away from the combustion chamber (60); the sealing plate (110) being partially inserted in two adjacent slots (31) of two adjacent burner assemblies (10) and comprises a portion exposed to the combustion chamber (60);
one or more holes (151) of a predefined cross-sectional area extending through a thickness of the sealing plate (110) positioned along a length of the sealing plate at the portion exposed to the combustion chamber (60); and
one or more containers (155) having a predefined volume attached to the back face (121) of the sealing plate (110) in fluid communication with the one or more holes (151) to create at least one acoustic damper (150).

2. Gas turbine combustor of claim 1, wherein the sealing plate (110) extends between a first and second distal ends (111,113).

3. Gas turbine combustor of claim 1, wherein the thickness of the sealing plate (110) extends between the front face (119) and the back face (121) of the sealing plate (110).

4. Gas turbine combustor of claim 1, wherein the thickness of the sealing plate (110) is between 2 mm and 8 mm +/- 0.1 mm.

5. Gas turbine combustor of claim 1, wherein combination of the one or more holes (151) and the one or more containers (155) form corresponding one or more dampers (150).

6. Gas turbine combustor of claim 5, wherein the one or more dampers (150) are tuned to damp one or more pulsation frequencies.

7. Gas turbine combustor of claim 6, wherein the one or more dampers (150) are tuned by varying the size and volume of the corresponding one or more holes (151) and the one or more volumes (155).

**Patentansprüche**

1. Gasturbinenbrennervorrichtung, enthaltend:

    - eine Vielzahl von Brenneranordnungen (10), die einander benachbart angeordnet sind, wobei jede Brenneranordnung (10) eine Vorderplatte (20) mit einer zu einer Brennkammer (60) weisenden Vorderseite und einer von der Brennkammer weg weisenden Rückseite aufweist, die mit einem Brennerhals (40) verbunden ist, wobei die Frontplatte (20) mit einem oberen Rand (21) und einem unteren Rand (23), einem linken Rand (25) und einem rechten Rand (29) versehen ist; wobei der linke Rand (25) und der rechte Rand (29) einen Schlitz (31) haben; - eine Vielzahl von Streifendichtungsanordnungen (100), die dafür konfiguriert sind, eine Abdichtung zwischen einer ersten Vorderplatte (20) einer Brenneranordnung (10) und einer zweiten Vorderplatte (20) einer benachbarten Brenneranordnung (100) bereitzustellen;

    wobei jede Streifendichtungsanordnung (100) enthält:

    eine Dichtplatte (110) mit einer zu der Brennkammer (60) weisenden Vorderseite (119) und einer von der Brennkammer (60) weg weisenden Rückseite; wobei die Dichtplatte (110) teilweise in zwei benachbarte Schlitze (31) von zwei benachbarten Brenneranordnungen (10) eingesetzt ist und einen in der Brennkammer (60) freiliegenden Teil aufweist; ein oder mehrere Löcher (151) mit einer vorbestimmten Querschnittsfläche, die sich durch die Dicke der Dichtplatte (110) erstrecken und entlang einer Länge der Dichtplatte an dem in der Brennkammer (60) freiliegenden Teil positioniert sind; und einen oder mehrere Behälter (155) mit einem vorbestimmten Volumen, die an der Rückseite (121) der Dichtplatte (110) in Fluidverbindung mit dem einen oder den mehreren Löchern (151) angebracht sind, um mindestens einen Schalldämpfer (150) zu bilden.

2. Gasturbinenbrennervorrichtung nach Anspruch 1, wobei die Dichtplatte (110) sich zwischen einem ersten und einem zweiten distalen Ende (111, 113) erstreckt.

3. Gasturbinenbrennervorrichtung nach Anspruch 1, wobei die Dicke der Dichtplatte (110) sich zwischen der Vorderseite (119) und der Rückseite (121) der Dichtplatte (110) erstreckt.

4. Gasturbinenbrennervorrichtung nach Anspruch 1, wobei die Dicke der Dichtplatte (110) zwischen 2 mm und 8 mm +/-0,1 mm beträgt.

5. Gasturbinenbrennervorrichtung nach Anspruch 1, wobei die Kombination des einen oder der mehreren Löcher (151) und des einen oder der mehreren Behälter (155) entsprechend einen oder mehrere Dämpfer (150) bildet.

6. Gasturbinenbrennervorrichtung nach Anspruch 5, wobei der eine oder die mehreren Dämpfer (150) so abgestimmt sind, dass sie eine oder mehrere Pulsationsfrequenzen dämpfen.

7. Gasturbinenbrennervorrichtung nach Anspruch 6, wobei der eine oder die mehreren Dämpfer (150) durch Variieren der Größe und des Volumens des entsprechenden einen oder der mehreren Löcher (151) und des einen oder der mehreren Volumina (155) abgestimmt werden.

**Revendications**

1. Chambre de combustion d'une turbine à gaz comprenant :

    - une pluralité d'ensembles brûleurs (10) agencés adjacents les uns aux autres, où chaque ensemble brûleur (10) comprend un panneau avant (20) avec une face avant qui fait face à une chambre de combustion (60), et une face arrière qui fait face en s'éloignant de la chambre de combustion, et qui est connecté à un entourage de brûleur (40), le panneau avant (20) étant doté d'un bord supérieur (21) et d'un bord inférieur (23), d'un bord gauche (25) et d'un bord droit (29) ; le bord gauche (25) et le bord droit (29) présentant une fente (31) ;
- une pluralité d'agencements de joint d'étanchéité en bande (100) configurés pour fournir un joint d'étanchéité entre un premier panneau avant (20) d'un ensemble brûleur (10), et un second panneau avant (20) d'un ensemble brûleur adjacent (100) :

où

chaque agencement de joint d'étanchéité en bande (100) comprend :

une plaque d'étanchéité (110) avec une face avant (119) qui fait face à la chambre de combustion (60), et une face arrière qui fait face en s'éloignant de la chambre de combustion (60) ; la plaque d'étanchéité (110) étant insérée partiellement dans deux fentes adjacentes (31) de deux ensembles brûleurs adjacents (10), et comprenant une partie exposée à la chambre de combustion (60) ; un ou plusieurs trous (151) d'une section en coupe transversale prédéfinie s'étendant à travers l'épaisseur de la plaque d'étanchéité (110), positionnés sur la longueur de la plaque d'étanchéité au niveau de la partie exposée à la chambre de combustion (60) ; et un ou plusieurs contenants (155) présentant un volume prédéfini, fixés sur la face arrière (121) de la plaque d'étanchéité (110) en communication de fluide avec le ou les trous (151) pour créer au moins un amortisseur acoustique (150).

2. Chambre de combustion d'une turbine à gaz selon la revendication 1, où la plaque d'étanchéité (110) s'étend entre des première et seconde extrémités distales (111, 113).

3. Chambre de combustion d'une turbine à gaz selon la revendication 1, où l'épaisseur de la plaque d'étanchéité (110) s'étend entre la face avant (119) et la face arrière (121) de la plaque d'étanchéité (110).

4. Chambre de combustion d'une turbine à gaz selon la revendication 1, où l'épaisseur de la plaque d'étanchéité (110) est comprise entre 2 mm et 8 mm +/- 0,1 mm.

5. Chambre de combustion d'une turbine à gaz selon la revendication 1, où les associations d'un ou de plusieurs trous (151) et d'un ou de plusieurs contenants (155), forment un ou plusieurs amortisseurs correspondants (150).

6. Chambre de combustion d'une turbine à gaz selon la revendication 5, où le ou les amortisseurs (150) sont accordés pour atténuer une ou plusieurs fréquences de pulsation.

7. Chambre de combustion d'une turbine à gaz selon la revendication 6, où le ou les amortisseurs (150) sont accordés en faisant varier la taille et le volume d'un ou de plusieurs trous correspondants (151) et le ou les volumes (155).

*Fig. 1*

*Fig. 2*

Fig. 3

*Fig. 4*

Fig. 5

*Fig. 6*

*Fig. 7*

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1669670 A
- EP 1890083 A

- US 20110179796 A